# EUROPEAN PATENT APPLICATION

(11) **EP 1 503 327 A1**
(43) Date of publication of application: **02.02.2005**
(21) Application number: 02730789.1
(22) Date of filing: 30.05.2002
(51) Int. Cl.: G06K 19/07, G06F 17/60, H04M 1/00

(54) **DYNAMIC BAR CODE DISPLAY APPARATUS; DYNAMIC BAR CODE GENERATION METHOD; AND STORAGE MEDIUM GENERATING DYNAMIC BAR CODE**

(30) Priority: 23.04.2002 JP 2002121286
(71) Applicant: Nakamura, Norio, Setagaya-ku, Tokyo 154-0016 (JP); Kato, Tatemi, Setagaya-ku, Tokyo 156-0055 (JP); Owada, Hiroshi, Meguro-ku, Tokyo 152-0022 (JP)
(72) Inventor: OWADA, Hiroshi, Meguro-ku, Tokyo 152-0022 (JP)
(74) Representative: Skone James, Robert Edmund
(86) International application number: PCT/JP2002/005277
(87) International publication number: WO 2003/091944

(57) **Abstract**

By changing methods from the conventional method in which a plurality of bar codes are arranged in the space for use to the method of the invention in which a plurality of bar codes are used according to time, so that the conventional bar codes which are displayed in a fixed fashion are changed over to dynamic bar codes which are displayed dynamically, a dynamic bar code display apparatus for displaying bar codes which are difficult to be copied and which increases the volume of data of the bar codes, a dynamic bar code generation method and a storage medium which generates dynamic bar codes can be provided. The bar code display apparatus comprises a storage means in which bar code images are stored, a display means for displaying at least two or more bar codes continuously and a control means for controlling the display means.

## Description

### Technical Field

The present invention relates to a dynamic bar code display apparatus, a dynamic bar code generating method and a storage medium which generates a dynamic bar code.

### Background Art

In conventional bar codes (bar codes printed on printed matters, or bar codes which are displayed fixedly), the volume of usable data has been limited due to conditions such as standards. In addition, while it is possible to increase the volume of data by preparing bar codes which are out of the standards, the versatility of bar codes tends to be lost, and specific bar-code readers need to be prepared, leading to an increase in cost.

In addition, while there exists a two-dimensional bar code standard in which a bar code is two dimensioned in order to increase the data volume carried thereby, similar to the above case, there has existed a limit on the volume of data that is printed on printed matters, leading to expensive bar-code readers. Furthermore, in bar codes currently used on bills for the settlement of public utility charges, in the order of three bar codes are designed to be read, and hence a certain length of time is required to complete the reading of bar codes provided at three locations.

In addition, with numbers according to the JAN 13 (a standard) which each consist of in the order of thirteen digits, the number of digits is limited, which causes a limit on the application thereof, and hence the numbers according to this standard have been unable to be used to identify individuals. Furthermore, with the conventional bar codes, since they are printed, there has been a problem that the bar cords can easily be copied.

Due to this, there has been existing a demand for a method and an apparatus for displaying bar codes which enable the use of conventional bar-code readers, which provide a large volume of data and which are difficult to be copied.

Then, the present invention was made in the light of the situations associated with the problems inherent in the related art, and an object thereof is to provide a dynamic bar code display apparatus for displaying bar codes which can increase the volume of data carried thereby and which are difficult to be copied by implementing a shift in display methods from the conventional display method in which a plurality of bar codes are arranged for use in a space to a display method in which a plurality of bar codes are used in a temporal order fashion so that the conventional bar codes which are displayed in a fixed fashion can be switched over dynamically, a dynamic bar code generating method and a storage medium which generates a dynamic bar code.

### Disclosure of the Invention

With a view to attaining the object, according a first aspect of the invention, there is provided a dynamic bar code display apparatus comprising a storage means in which the image of a bar code is stored, a display means for displaying continuously at least two or more bar codes and a control means for controlling the display means, whereby at least two or more bar codes are displayed continuously.

According to the dynamic bar code display apparatus set forth in the first aspect of the invention, the volume of data carried by the bar codes can be increased by displaying continuously at least two or more car codes, and the bar codes which are difficult to be copied easily can be displayed by displaying the bar codes dynamically.

In addition, according to a second aspect of the invention, there is provided a dynamic bar code display apparatus as set forth in the first aspect of the invention, comprising a communication means for communicating with an external data base via a network, so that at least two or more bar codes are continuously displayed thereon based on information transmitted to and received from the external data base as a result of transmitting to and receiving from the external data base bar code images and numerical information.

According to the dynamic bar code display apparatus set forth in the second aspect of the invention, the bar codes can be displayed dynamically by communicating with the external data base via the network so as to transmit to and receive from the external data base numeric value information required to display the bar codes on the display apparatus and bar code images prepared on the data base side.

Furthermore, according to a third aspect of the invention, there is provided a dynamic bar code display apparatus as set forth in the first or second aspect of the invention, comprising a generating means for generating at least two or more bar code images based on information transmitted and received by the communication means, so that the images so generated are made to be stored in the storage means so as to implement the display of at least two or more bar codes.

According to the dynamic bar code display apparatus set forth in the third aspect of the invention, the bar codes can be displayed dynamically by dynamically generating the bar code images based on numeric values contained in the numeric value information transmitted and received by the communication means or by combining the bar code images produced on the data base side.

In addition, according to a fourth aspect of the invention, there is provided a dynamic bar code display apparatus as set forth in any of the first to third aspect of the invention, there is provided a dynamic bar code display apparatus, wherein a bar code display position of the display means remains unchanged for displaying bar codes.

According to the dynamic bar code display apparatus set forth in the fourth aspect of the invention, a plurality of bar codes can be read without moving a bar-code reader when reading the bar codes with the bar-code reader by maintaining the bar code display position unchanged for displaying bar codes, thereby making it possible to reduce the reading time.

Furthermore, according to a fifth aspect of the invention, there is provided a dynamic bar code display apparatus as set forth in any of the first to fourth aspects of the invention, wherein two or more bar codes which are displayed on the display means each have a code displayed therein which has an additional code indicating a sequence thereof.

According to the dynamic bar code display apparatus set forth in the fifth aspect of the invention, the bar-code reader can be made to obtain an accurate numeric value by adding to each bar code the code indicating the sequence thereof so that the sequence of the bar codes can be reconstructed based on the codes each indicating the sequence thereof, even in the event that the bar-code reader starts the reading of the bar codes at any time and any timing.

In addition, according to a sixth aspect of the invention, there is provided a dynamic bar code display apparatus as set forth in any of the first to fifth aspects of the invention, wherein a code indicating a result of calculation of numeric value information of part or all of bar codes is added to be displayed in either or any of at least two or more bar codes which are displayed by the display means.

According to the dynamic bar code display apparatus set forth in the sixth aspect of the invention, as in the case with check digits used as a standard in bar codes, a calculation is performed based on numeric value information of part or all of the bar codes, and information on the result of the calculation is added, whereby after all of the bar codes have been read, the numeric value information of part or all of bar codes is calculated, and the result of the calculation only has to be compared with the calculation result information to confirm whether or not they coincide with each other. Thus, since a check digit displayed in a bar code does not always have to be calculated every time the bar code has been read, the time involved can be reduced.

Furthermore, according to a seventh aspect of the invention, there is provided a dynamic bar code display apparatus as set forth in any of the first to sixth aspects of the invention, wherein at least two or more bar codes which are displayed on the display means each have a code displayed therein which has an additional code indicating time information.

According to the dynamic bar code display apparatus set forth in the seventh aspect of the invention, a time limit for usage of the dynamic bar code can be provided by adding to each bar code a time method when the bar code is generated or the image thereof is transmitted or received so as to prevent the copying of the dynamic bar code by, for example, prohibiting the use of the dynamic bar code in the event that a certain length of time is determined to have elapsed since the time when the bar code was generated by comparing the time when the bar code was generated with the current time when the bar code is used.

In addition, according to an eighth aspect of the invention, there is provided a dynamic bar code display apparatus as set forth in any of the first to seventh aspects of the invention, wherein at least two or more bar codes which are displayed on the display means each have a code displayed therein which has an additional code indicating a code delimiter.

According to the dynamic bar code display apparatus set forth in the eighth aspect of the invention, accurate numeric values of the bar codes, even in the event that the numbers of digits of the bar codes are different, can be displayed by adding to each bar code a code indicating a code delimiter when the bar code is generated or the image thereof is transmitted or received so that the numeric value information read according to the code delimiter can be processed separately when reading with a bar-code reader and restoring, for example, a bar code consisting of 13 digits + 13 digits + 8 digits.

Furthermore, according to a ninth aspect of the invention, there is provided a dynamic bar code display apparatus as set forth in any of the first to eighth aspects of the invention, wherein, in the event that a normal communication cannot be implemented in the communication means, at least two or more bar codes are generated for display based on a record of the previous normal communication which is stored in the storage means.

According to the dynamic bar code display apparatus set forth in the ninth aspect of the invention, the bar codes are generated for display based on the record of the previous normal communication which is stored in the storage means, in the event that a normal communication cannot be implemented in the communication means, so that the bar codes so generated can be displayed as temporary bar codes even in case there existed a state in which the normal communication is unavailable.

In addition, according to a tenth aspect of the invention, there is provided a dynamic bar code display apparatus as set forth in any of the first to ninth aspects of the invention, comprising a mobile telephone that can be carried.

According to the dynamic bar code display apparatus set forth in the tenth aspect of the invention, since the display apparatus is constituted by a mobile telephone, numeric value information can be prepared and images of the bar codes can be transmitted and received based on personal information imparted to the mobile telephone by communicating with the external data base with respect to the personal information.

Furthermore, according to an eleventh aspect of the invention, there is provided a dynamic car code display apparatus as set forth in any of the first to tenth aspects of the invention, wherein the communication by the communication means is implemented by transmitting and receiving information to and from the external data base by accessing the network using radio waves.

According to the dynamic bar code display apparatus set forth in the eleventh aspect of the invention, the display apparatus can be carried easily by making use of not a wired communication but a radio communication (radio waves of the like) when accessing the external data base.

According to a twelfth aspect of the invention, there is provided a dynamic bar code display method having a reading step of reading at least two or more bar code images from a storage means in which bar code images are stored and a displaying step of displaying at least two or more bar codes by causing the at least two or more bar code images so read to continue.

According to the dynamic bar cord display method set forth in the twelfth aspect of the invention, the data volume of the bar codes can be increased by displaying the at least two or more bar codes continuously, and since the bar codes are displayed dynamically, the bar codes which are difficult to be copied easily can be displayed.

According to a thirteenth aspect of the invention, there is provided a dynamic bar code display method having a bar code generating step of generating a plurality of bar code images from arbitrary numeric value information and a displaying step for displaying at least two or more bar codes by causing the at least two or more bar code images so generated to continue.

According to the dynamic bar code display method set forth in the thirteenth aspect of the invention, the plurality of bar codes can be generated based on the numeric value from the arbitrary numeric value information and can be displayed dynamically.

In addition, according to a fourteenth aspect of the invention, there is provided a dynamic bar code display method as set forth in the twelfth or thirteenth aspect of the invention, having a communicating step of communicating with an external data base via a network in the communicating step, whereby numeric value information or bar code image information which is required to generate a bar code is transmitted to and received from the external data base.

According to the dynamic bar code display method set forth in the fourteenth aspect of the invention, the bar codes can be displayed dynamically by dynamically generating the bar code images based on numeric values contained in the numeric value information transmitted and received by the communicating step or by combining the bar code images produced on the data base side.

Furthermore, according to a fifteenth aspect of the invention, there is provided a dynamic bar code display method as set forth in either of the thirteenth and fourteenth aspects of the invention, having a sequence adding step for adding a code indicating a sequence thereof to each of the plurality of bar codes when the plurality of bar codes are generated in the bar code generating step.

According to the dynamic bar code display method set forth in the fifteenth aspect of the invention, the bar-code reader can be made to obtain an accurate numeric value by adding to each bar code the code indicating the sequence thereof so that the sequence of the bar codes can be reconstructed based on the codes each indicating the sequence thereof, even in the event that the bar-code reader starts the reading of the bar codes at any time and any timing.

In addition, according to a sixteenth aspect of the invention, there is provided a dynamic bar code display method as set forth in any of the thirteenth to fifteenth aspects of the invention, having a time adding step of adding a code indicating a time to one or each of the plurality of bar codes when the plurality of bar codes are generated in the bar code generating step.

According to the dynamic bar code display method set forth in the sixteenth aspect of the invention, a time limit for usage of the dynamic bar code can be provided by adding to one or each of the bar codes a time method when the bar codes are generated or the images thereof are transmitted or received so as to prevent the copying of the dynamic bar codes by, for example, prohibiting the use of the dynamic bar code in the event that a certain length of time is determined to have elapsed since the time when the bar code was generated by comparing the time when the bar code was generated with the current time when the bar code is used.

Furthermore, according to a seventeenth aspect of the invention, there is provided a dynamic bar code display method as set forth in any of the thirteenth to sixteenth aspects of the invention, having a calculation result adding step of adding a code indicating a result of calculation of the numeric value information to one or each of the plurality of bar codes when the plurality of bar codes are generated in the bar code generating step.

According to the dynamic bar code display method set forth in the seventeenth aspect of the invention, as in the case with check digits used as a standard in bar codes, a calculation is performed based on numeric value information of part or all of the bar codes, and information on the result of the calculation is added, whereby after all of the bar codes have been read, the numeric value information of part or all of bar codes is calculated, and the result of the calculation only has to be compared with the calculation result information to confirm whether or not they coincide with each other. Thus, since a check digit displayed in a bar code does not always have to be calculated every time the bar code has been read, the time involved can be reduced.

In addition, according to an eighteenth aspect of the invention, there is provided a dynamic bar code display method as set forth in any of the thirteenth to seventeenth aspects of the invention, having a code delimiter adding step of adding a code indicating a code delimiter to one or each of the plurality of bar codes when the plurality of bar codes are generated in the bar code generating step.

According to the dynamic bar code display method set forth in the eighteenth aspect of the invention, accurate numeric values of the bar codes, even in the event that the numbers of digits of the bar codes are different, can be displayed by adding to each bar code a code indicating a code delimiter when the bar code is generated or the image thereof is transmitted or received so that the numeric value information read according to the code delimiter can be processed separately when reading with a bar-code reader and restoring, for example, a bar code consisting of 13 digits + 13 digits + 8 digits.

Furthermore, according to a nineteenth aspect of the invention, there is provided a dynamic bar code display method as set forth in any of the twelfth to eighteenth aspects of the invention, wherein in the event that a normal communication cannot be implemented in the communicating step, at least two or more bar codes are generated for display based on a record of the previous normal communication which is stored in a storage means.

According to the dynamic bar code display method set forth in the nineteenth aspect of the invention, the bar codes are generated for display based on the record of the previous normal communication which is stored in the storage means, in the event that a normal communication cannot be implemented in the communicating step, so that the bar codes so generated can be displayed as temporary bar codes even in case there existed a state in which the normal communication is unavailable.

According to a twentieth aspect of the invention, there is provided a storage medium, wherein a program is stored in the storage medium which contains a reading program code for reading at least two or more images each having a bar code from a storage means where bar code images are stored and a displaying program code, which is executable by a computer, for displaying at least two or more bar codes by causing the images so read to continue.

According to the storage medium set forth in the twentieth aspect of the invention, when executing the program of the storage medium, the data volume of the bar codes can be increased by causing the at least two or more bar codes to be displayed continuously, and since the bar codes are displayed continuously, the bar codes which are difficult to be copied easily can be displayed.

According to a twenty-first aspect of the invention, there is provided a storage medium, wherein a program is stored in the storage medium which contains a bar code image generating program code for generating a plurality of bar code images from arbitrary numeric value information and a displaying program code, which is executable by a computer, for displaying at least two or more bar codes by causing the plurality of bar code images so generated to continue.

According to the storage medium set forth in the twenty-first aspect of the invention, when executing the program of the storage medium, the plurality of bar codes can be generated based on numeric values contained in the arbitrary numeric value information so that the plurality of bar codes so generated can be displayed dynamically.

In addition, according to a twenty-second aspect of the invention, there is provided a storage medium as set forth in the twentieth or twenty-first aspect of the invention, wherein a program is stored in the storage medium which contains a communicating program code provided in the dynamic bar code display program for communicating with an external data base via a network and a program code, which is executable by a computer, for transmitting to and receiving from the external data base numeric value information or a bar code image itself which is required to generate a bar code in the communicating program.

According to the storage medium set forth in the twenty-second aspect of the invention, when the program of the storage medium is executed, the bar codes can be displayed dynamically by dynamically generating the bar code images based on numeric values contained in the numeric value information transmitted and received by the communicating program or by combining the bar code images produced on the data base side.

Furthermore, according to a twenty-third aspect of the invention, there is provided a storage medium as set forth in either of the twenty-first and twenty-second aspects of the invention, wherein a program is stored in the storage medium which contains a sequence adding program code, which is executable by a computer, for adding a code indicating a sequence thereof to each of a plurality of bar codes when the plurality of bar codes are generated in the bar code generating program.

According to the storage medium set forth in the twenty-third aspect of the invention, when the program of the storage medium is executed, a bar-code reader can be made to obtain an accurate numeric value by adding to each bar code the code indicating the sequence thereof so that the sequence of the bar codes can be reconstructed based on the codes each indicating the sequence thereof, even in the event that the bar-code reader starts the reading of the bar codes at any time and any timing.

In addition, according to a twenty-fourth aspect of the invention, there is provided a storage medium as set forth in any of the twenty-first to twenty-third aspects of the invention, wherein a program is stored in the storage medium which contains a time adding program code, which is executable by a computer, for adding a code indicating a time to one or each of the plurality of bar codes when the plurality of bar codes are generated in the bar code generating program.

According to the storage medium set forth in the twenty-fourth aspect of the invention, when executing the program of the storage medium, a time limit for usage of the dynamic bar code can be provided by adding to one or each of the bar codes a time method when the bar codes are generated or the images thereof are transmitted or received so as to prevent the copying of the dynamic bar codes by, for example, prohibiting the use of the dynamic bar code in the event that a certain length of time is determined to have elapsed since the time when the bar code was generated by comparing the time when the bar code was generated with the current time when the bar code is used.

Furthermore, according to a twenty-fifth aspect of the invention, there is provided a storage medium as set forth in any of the twenty-first to twenty-fourth aspects of the invention, wherein a program is stored in the storage medium which contains a code delimiter adding program code, which is executable by a computer, for adding a code indicating a code delimiter to one or each of the plurality of bar codes when the plurality of bar codes are generated in the bar code generating program.

According to the storage medium set forth in the twenty-fifth aspect of the invention, when executing the program of the storage medium, accurate numeric values of the bar codes, even in the event that the numbers of digits of the bar codes are different, can be displayed by adding to each bar code a code indicating a code delimiter when the bar code is generated or the image thereof is transmitted or received so that the numeric value information read according to the code delimiter can be processed separately when reading with a bar-code reader and restoring, for example, a bar code consisting of 13 digits + 13 digits + 8 digits.

In addition, according to a twenty-sixth aspect of the invention, there is provided a storage medium as set forth in any of the twenty-first to twenty-fifth aspects of the invention, wherein a program is stored in the storage medium which contains a calculation result adding program code, which is executable by a computer, for adding a code indicating a result of calculation of the numeric value information to one or each of the plurality of bar codes when the plurality of bar codes are generated in the bar code generating program.

According to the storage medium set forth in the twenty-sixth aspect of the invention, when executing the program of the storage medium, as in the case with check digits used as a standard in bar codes, a calculation is performed based on numeric value information of part or all of the bar codes, and information on the result of the calculation is added, whereby after all of the bar codes have been read, the numeric value information of part or all of bar codes is calculated, and the result of the calculation only has to be compared with the calculation result information to confirm whether or not they coincide with each other. Thus, since a check digit displayed in a bar code does not always have to be calculated every time the bar code has been read, the time involved can be reduced.

Furthermore, according to a twenty-seventh aspect of the invention, there is provided a storage medium as set forth in any of the twentieth to twenty-sixth aspects of the invention, wherein a program is stored in the storage medium which contains a program, which is executable by a computer, for generating at least two or more bar codes for display based on a record of the previous normal communication which is stored in a storage means, in the event that a normal communication cannot be implemented in the communicating program.

According to the storage medium set forth in the twenty-seventh aspect of the invention, when executing the program of the storage medium, the bar codes are generated for display based on the record of the previous normal communication which is stored in the storage means, in the event that a normal communication cannot be implemented in the communicating program, so that the bar codes so generated can be displayed as temporary bar codes even in case there existed a state in which the normal communication is unavailable.

The dynamic bar code display apparatus is a bar code display apparatus comprising a storage means which stores therein images of the bar codes, a display means for displaying at least two or more bar codes continuously, a control means for controlling the display means, a communication means for communicating with the external data base via the network and a generation means for generating at least two or more bar code images based on information transmitted and received by the communication means.

In addition, the bar code display position of the display means remains unchanged at all times, and the code to which the code indicating the sequence of the bar code is added is displayed in the at least two or more bar codes which are displayed by the display means. The code indicating the result of the calculation of the numeric value information of part or all of the bar codes is added to one or each of the at least two or more bar codes which are displayed by the display means. The code to which the code indicating the time information is added is displayed in the at least two or more bar codes which are displayed by the display means, and the code to which the code indicating the code delimiter is added is displayed in the at least two or more bar codes which are displayed by the display means. Furthermore, in the event that the proper communication cannot be implemented in the communication means, at least two or more bar codes are generated based on the record of the previous normal communication which is stored in the storage means, so that the bar codes so generated can be displayed.

The dynamic bar code display apparatus is made up of the mobile telephone which can be carried, and the communication by the communication means is designed to be implemented by accessing the network using radio waves so as to implement transmission to and reception from the external data base.

In addition, the dynamic bar code display method is a method having a reading step for reading at least two or more bar code images from the storage means where the bar code images are stored, a displaying step for displaying at least two or more bar codes by causing the images so read to continue, a bar code generating step for generating the plurality of bar codes from the arbitrary numeric value information, a communicating step for communicating with the external data base via the network, a sequence adding step for adding each of the bar codes the code indicating the sequence thereof, a time adding step for adding the code indicating time to one or each of the plurality of bar codes, a calculation result adding step for adding the code indicating the result of the calculation of the numeric value information to one or each of the plurality of bar codes, a code delimiter adding step for adding the code indicating the code delimiter to one or each of the plurality of bar codes, and a bar code generating step for generating at least two or more bar codes based on the record of the previous normal communication stored in the storage means in the event that the normal communication cannot be implemented.

Furthermore, the storage medium is a storage medium having a reading program code for reading at leas two or more images each having a bar code from a storage means in which bar code images are stored, a displaying program code for displaying at least two or more bar codes by causing the images so read to continue, a bar code generating program code for generating a plurality of bar codes from arbitrary numeric value information, a communicating program code for communicating with an external data base via a network, a sequence adding program code for adding to each bar code a code indicating a sequence thereof, a time adding program code for adding to one or each of the plurality of bar codes a code indicating a time, a code delimiter adding program code for adding to one or each of the plurality of bar codes a code indicating a code delimiter, a calculation result adding program code for adding to one or each of the plurality of bar codes a code indicating a result of calculation of numeric value information, and a program code for generating two or more bar codes based on a record of the previous normal communication stored in the storage medium so as to display the bar codes so generated, in the event that a normal communication is unavailable.

### Brief Description of the Drawings

Fig. 1 is a block diagram showing an embodiment of a dynamic bar code display apparatus according to the present invention.
Fig. 2 is a drawing showing a display apparatus according to the dynamic bar code display apparatus according to the present invention and a bar-code reader.
Fig. 3 is a drawing showing a state in which a dynamic bar code displayed on a display unit of the dynamic bar code display apparatus of the present invention is being read dynamically by the bar-code reader.
Fig. 4 is a drawing showing the configuration of a JAN (standard) bar code.
Fig. 5 is a drawing showing the configuration of a JAN 8 (standard) bar.
Fig. 6 is a chart showing combinations of modules according to the JAN 8 (standard).

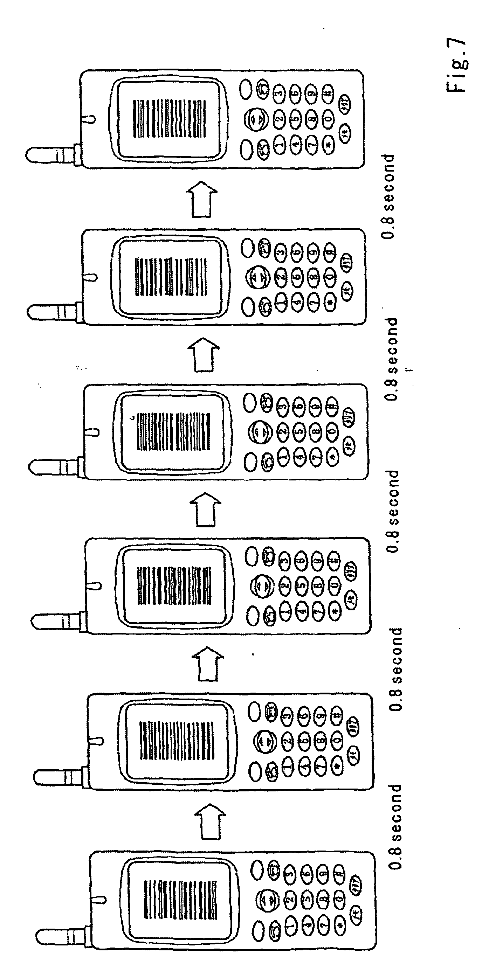

Fig. 7 is a drawing showing dynamic bar code changes by the dynamic bar code display apparatus according to the present invention.
Fig. 8 a drawing showing a format related to the generation of a bar code by the dynamic bar code display apparatus according to the present invention.
Fig. 9 is a flowchart showing the generation of a bar code by the dynamic bar code display apparatus according to the present invention.

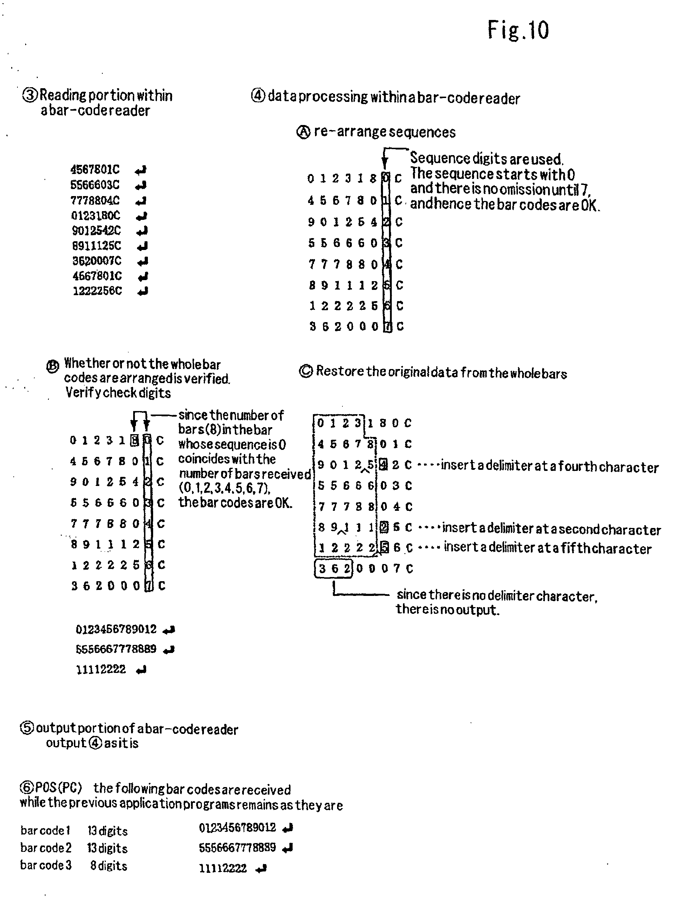

Fig. 10 is a flowchart of bar code reading occurring on the bar-code reader of the dynamic bar code display apparatus according to the present invention.
Fig. 11 is a drawing showing information stored in a data base, when dynamic bar codes according to the present invention are in use.
Fig. 12 is a flowchart showing a flow of pre-registration of information in the data base, when the dynamic bar codes according to the invention are in use.
Fig. 13 is a flowchart showing a flow of pre-registration of information in the display unit, when the dynamic bar codes according to the invention are in use.
Fig. 14 is a flowchart showing a process flow on the display unit side where bar codes are displayed, when the dynamic bar codes according to the present invention are in use.
Fig. 15 is a flowchart showing a process flow on the bar-code reader side, when the dynamic bar codes according to the present invention are in use.

### Best Mode For Carrying out the Invention

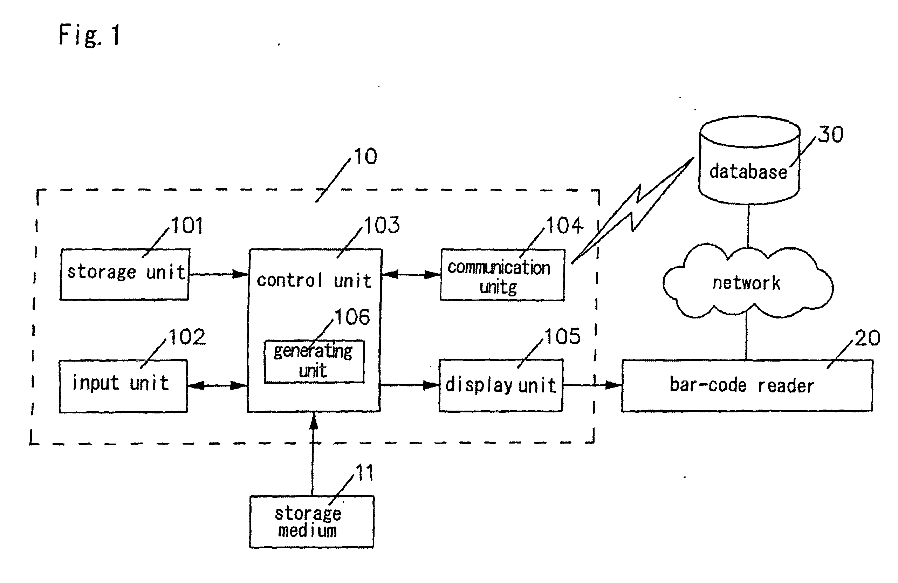

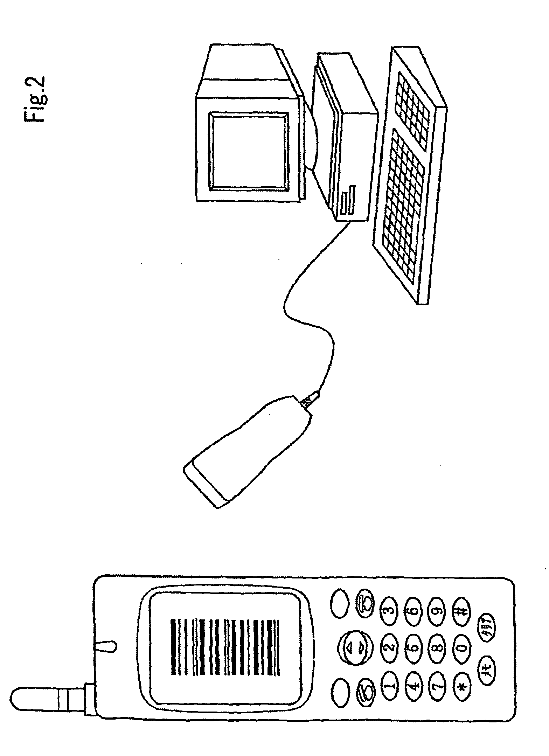

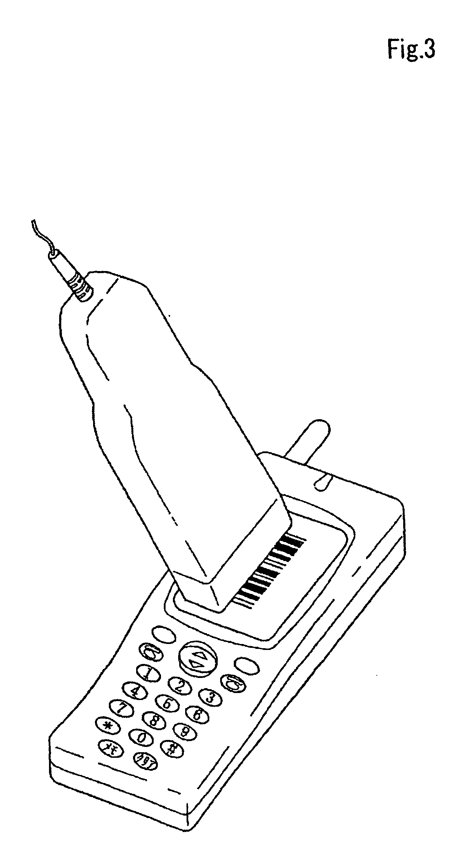

An embodiment of the present invention will be described below by reference to the accompanying drawings. A block diagram of a dynamic bar code display apparatus according to an embodiment of the present invention will be described by reference to Fig. 1. Fig. 2 is a drawing showing a display apparatus 10 and a bar-code reader 20. Fig. 3 is a drawing showing a state where a dynamic bar code displayed on a display unit 105 of the display apparatus 10 is being read dynamically by the bar-code reader.

The display apparatus 10 includes a storage unit 101, an input unit 102, a control unit 103, a communication unit 104 and the display unit 105. In addition to those units, a storage medium 11 is provided. While the display apparatus 10 may be formed into any shape, it is desirable that the display unit 105 provides a flat surface. In addition, in this embodiment, a mobile telephone which can execute programs is used as the display apparatus.

The storage unit 101 includes a RAM and a ROM, and the RAM is such as to temporarily store application programs, input directives, input information and results of processes. In addition, the ROM stores a basic,generation program in association with the generation of a bar code. Communication records resulting from communications by the communication unit 104 are also stored therein. In addition, bar code images which are transmitted and received directly by the communication unit 104 are also designed to be stored temporarily in the ROM. Furthermore, a storage medium storing a bar code generating program is also designed to be stored therein by assessing an external data base 30 or the like.

The input unit 102 is used as a user interface in such a manner as to make an input directive be displayed on a screen of the display unit to make the user attempt an input when accessing the external data base or causing a bar code to be displayed and is designed to transfer to the control unit 103 information inputted via the input unit 102 when a specific input is made by the user.

The control unit 103 is designed to read a predetermined program from the storage unit 101 or the storage medium 11 based on a directive inputted via the input unit 102, execute a process designated by the program so read and control the respective units of the display apparatus 10 centrally. The control unit 103 is designed to execute various processes based on the read predetermined programs, and to store in the storage unit 101 and display on the display unit 105 results of the processes so executed.

A generation unit 106 is designed to generate bar codes based on numeric value information obtained from the communication unit 104, the input unit 102 and the storage unit 101, current time, personal information and the like. In addition, the generation unit 106 is also designed to transform, in addition to the numeric value information, bar code image information directly sent from the external data base into a dynamic picture.

The communication unit 104 is designed to transmit and receive information to and from the external data base 30. Any means of communication may be used, provided that the transmission and reception of information can be implemented, which includes a wired communication using a telephone line and a connection cable, an optical communication by means of infrared rays and light and a radio communication by means of radio waves.

Here, there occurs no communication of the image of a bar code between the external data base 30 and the display apparatus 10, but a bar code image is received from the data base so that a dynamic bar code data image is generated via a program within the display apparatus 10, whereby the volume of data that is communicated can be suppressed to an extremely low level, and hence time for communication and the volume of data that is transferred can be suppressed. In addition, in a case where no bar code can be generated in the display apparatus 10, a dynamic bar code is generated within the data base 30, and data of the bar code image so generated is received by the display apparatus 10.

The display unit 105 is a display means 105 for displaying a dynamic bar code, and a cathode ray tube (CRT) , liquid crystal and dot matrix may be used mainly for the display unit. In this embodiment, an example will be described where a liquid crystal display is used for the display unit.

The storage medium 11 is made up of a semiconductor memory or a magnetic or optical storage unit. This storage medium 11 is such as to be provided fixedly to or detachably from the display apparatus 10 or a computer and to store program codes which can be executed on the computer or the display apparatus 10 and data processed using the respective processing programs.

In addition, the storage medium 11 such as a program code or data which is stored in the storage unit 101 may be designed to be received for storage from another equipment connected to the storage unit 101 via the communication unit 104. Furthermore, the storage medium may be designed to be connected to the other equipment side which is connected via the communication unit 104 or the like for use from the other equipment via a communication line.

The bar-code reader 20 is designed to read a dynamic bar code displayed on the display unit 105 of the display apparatus 10, to reconstruct numeric value information of the bar code so read after reading and to authenticate the numeric value information so obtained to the data base via a network.

The data base 30 stores, in addition to customer information (the name of an individual, a membership number, a password number, the number of points or the like) and product information, a storage medium for generating bar codes.

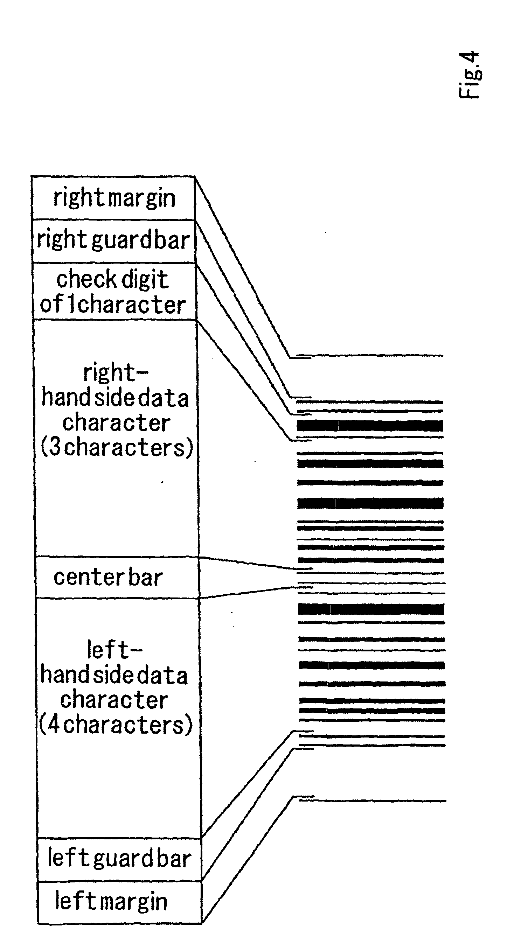

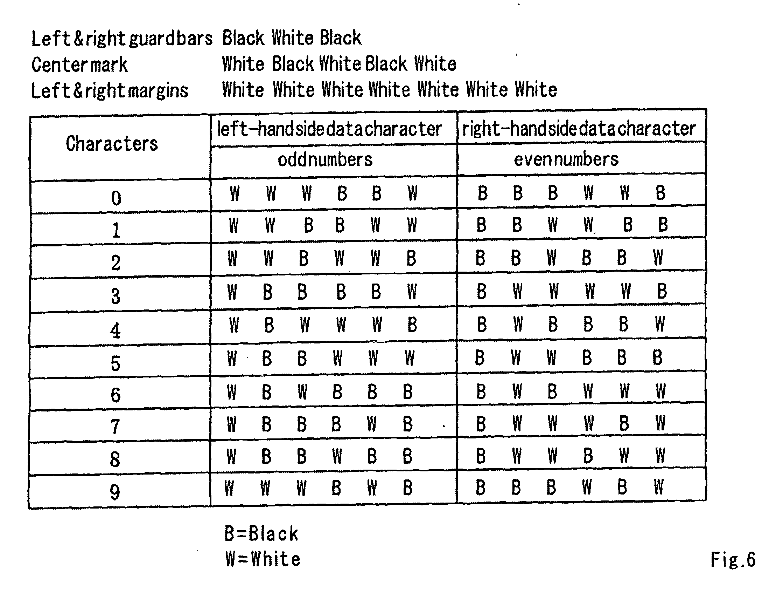

Referring to Figs. 4 to 6, a method for generating a bar code will be described. In a case where a bar code is generated based on a Japan Article Number or JAN 8 (standard), colors described in a table shown in Fig. 6 are combined for display. A bar code is constructed as shown in Fig. 4 and is made up of a left margin/a left guard bar/a left-hand side odd character portion of four digits/a center/a right-hand side even character portion of three digits/a check digit of a single digit/a right guard bar/a right margin.

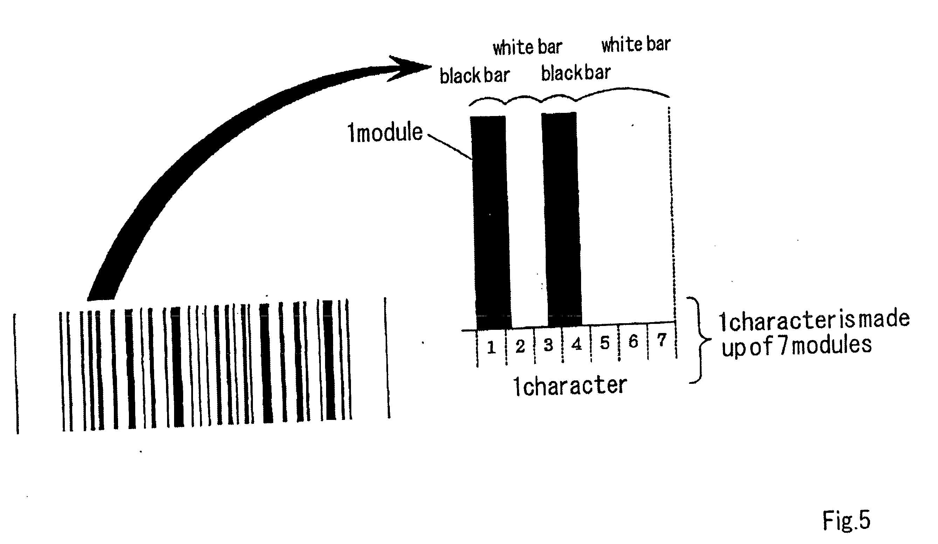

As shown in Fig. 5, a single bar is made up of a plurality of modules. The left margin and right margin are each made up of seven modules, which are all made white. The left guard bar and right guard bar are each made up of three modules, which are made "black, white, black", respectively. Furthermore, the center is made up of five modules, which are made "white, black, white, black, white", respectively. In addition, the left-hand side odd character and right-hand side even character are each made up of seven modules, which are configured as shown in the drawing. This JAN 8 (standard) bar code is made up of eighty-one modules.

Of these modules, since they are fixed by the standard, the left margin, right margin/left guard bar and right guard bar/center cannot be changed. Furthermore, of the total of eight digits made up of the left-hand side odd character, the right-hand side even character and the check digit of one digit, the check digit of one digit is designed to represent a result of a calculation of the left-hand side odd character and the right-hand side even character.

Due to this, the number of digits which can actually be used amounts to seven digits. In addition, in the case of the JAN 8 (standard), useable characters are only numbers from "0" to "9".

In a case where the bar code that has just been described above is attempted to be copied, when displaying bar codes dynamically continuously, since the recognition of bar codes with a special-purpose bar-code scanner is not always started from an initial bar code of the bar codes, a sequence code is added to each of bar codes when they are generated. According to this construction, even in the event that the reading using the bar-code reader 20 is started at any timing, information arranged according to the sequence can be reconstructed and obtained from bar code information so read.

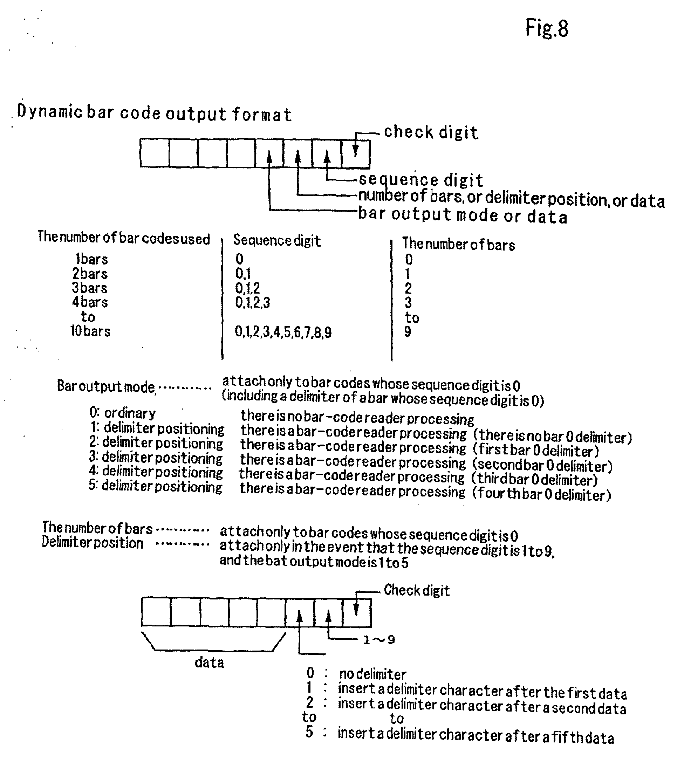

An example of adding of a sequence code will be described based on the embodiment. A sequence code is added as shown in Fig. 8.

When indicating a sequence, part of a sixth digit and a seventh digit are used to indicate the sequence of a bar code. To be specific, a number code of a bar indicating the number of bar codes to be used is added to a sixth digit of an initial bar code (the sequence digit is "0") , and a sequence digit is displayed in a seventh digit. The code associated with the number of bar codes to be used is used only in the initial bar code (the sequence digit is "0"), and a bar code in a sixth digit of the remaining bar codes is used as a data code.

The sequence digit is made up of numbers from "0" to "9" and the addition of sequence digits is started from a sequence digit indicated by "0". In addition, numbers from "0" to "9" are used to indicate the number of bars, and in the event that the number of bar is "0", the number of bar codes to be becomes one. In addition, in the event that the number of bars is "9", the number of bars to be used becomes 10. Additionally, the number of bar codes to be used can be increased by increasing the number of digits at the sequence digit.

In reading bar codes with the bar-code reader 20, when reading all of the bar codes, the total number of bar codes can be determined by reading the sequence digit "0". For example, in the event that the number of bars is read as being "3", the reading of all of the bar codes is understood to be completed when four bar codes whose sequence digits indicate "0" to "3" have been read.

As to a timing at which the display of a dynamic bar code is changed over, displays are rewritten with a cycle time of one sixtieth of a second on a liquid crystal display or a CRT display. In addition, the bar-code reader 20 is capable of reading a bar code one fiftieth or two hundredth of a second. Due to this, it is preferable that displays change over at a cycle time which constitutes a least common multiple of both the times, and the cycle time is considered to be in the order of one tenth of a second. While there is no limit on a maximum time since the bar-code reader 20 does not read the same data in a multiple fashion, a display period of 0.1 to 1.5 seconds is desirable for the display of bar codes since there is caused a limit from the operational perspective, and in this embodiment, the display of bar codes is changed over at a period of 0.8 second.

The reading speed of the bar-code reader 20 is increased by designing such that a generated bar code is displayed at the same position on the display unit 105. While the processing speed differs depending on types of bar-code readers, the bar-code reader 20 processes in the order of 100 scans per second. As to the processing time of bar-code readers, it happens quite often that time is lost due to a time required to recognize the position of a bar code and repetition of reading in order to enhance the reliability at the time of reading. With the dynamic bar code, however, in the recognition of the position of a bar code, since bar code images change over at the same position, the times required for the recognition of the position of a bar code and for repetition of reading are cut off. In addition, since a data check is implemented after several bar codes have been read, the number of times of data check at the time of reading can be reduced, thereby making it possible to attempt to reduce the processing time.

In addition, in generation of a bar code, the authentication of the bar code so generated can be secured further by adding time information to the bar code. Namely, since original data for use in preparing a bar code image can be made to be information which is not fixed so as to be variable with time, time data is included in the original data itself at the time of generating a bar code, and an algorithm is provided in the data base 30 and the generation unit 106 of bar code images in the display apparatus 10, so that a temporal coincidence in authentication can be confirmed with the data base 30, thereby making it possible to increase the security.

An example will be described in which time information is added to a bar code. In this example, time data that is added to a bar code is so added by using a second digit of a date of generation of the bar code. For example, in the event that the bar code is generated on the twenty-third, the numeric value indicating time information code is 3.

In the case of a bar code having no code delimiter, the bar code time information adding position is added as a calculation result code indicating a result of addition of the date code numeric value to a result of calculation of the numeric value information digit, whereas, in the event that a bar code having a delimiter code provided therein is generated, the date code is designed to be added before a digit before the calculation result code. When the numeric value of the time information code is referred to with the bar-code reader to confirm that the numeric value coincides with the date of the relevant day, the relevant bar code is authenticated. In contrast, in the event that there exists no coincidence between the numeric value and the date, no authentication is provided. Thus, even in the event that an attempt is made to copy the dynamic bar code in any form, since no coincidence can be provided between time information codes by adding the time information code to the dynamic bar code, the bar code so copied cannot be used.

In addition, when attempting to enhance the security further, the attempted enhancement can be attained by increasing the number of digits for the time information code. In addition, when generating a dynamic bar code the security of which is already enhanced, a dynamic bar code may be generated based on a dedicated personal information or a generation algorithm other than the bar code generation algorithm that has just been described above.

In collecting public utility charges at a convenience store, bar code blocks of 13 digits + 13 digits + 8 digits are printed on a bill, and the bar code blocks so printed are then read with a normal bar-code reader so as to be input into a POS system. In a case where dynamic bar codes on a mobile apparatus are used for this purpose, original data consisting of three kinds of bar code blocks is divided into dynamic bar codes, and in the event that delimiter information as a block is added, a bar code of 13 digits + 13 digits + 8 digits, which is used on public utility charge bills, can be represented.

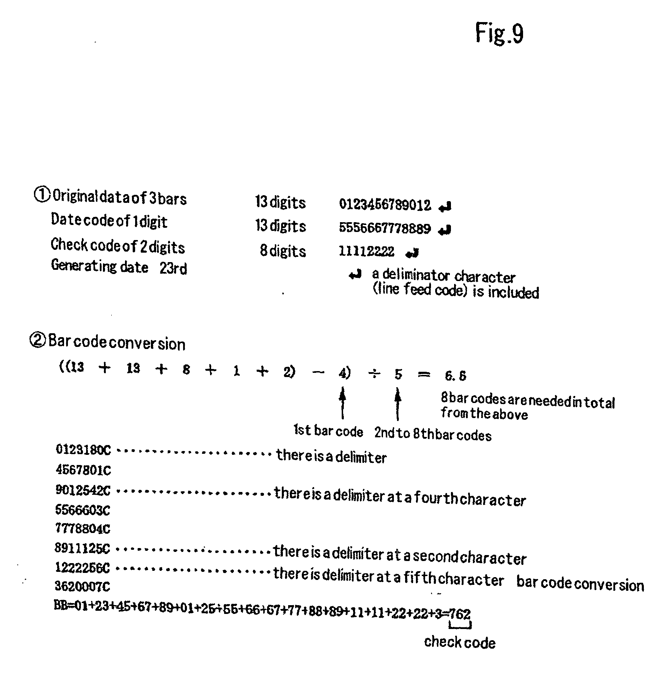

For example, as shown in Fig. 9, when the JAN 8 (bar code standard) is used, eight bar codes are needed. To be specific, while all of the eight digits can be used by a delimiter code of one digit + a sequence code of one digit + a check digit of one digit and five digits as data digits, in the case of an initial bar code (the sequence digit is "0"), since a code indicating the number of bars is added, the digits that can be used as data digits becomes four. Namely, data digits (4 digits × 1 + 5 digits × 6) + (a calculation result code (2 digits) + a time information code (1 digit) × 1) = 8 bar codes. By providing the bar codes like this, 13 digits + 13 digits + 8 digits = 34 digits, which is used on a public utility charge bill, can be represented.

An example will be described in which a result of digit calculation of numeric value information is added to a bar code by adding digit delimiter information to the bar code.

In addition, in the event that a delimiter code is added to a bar code, a delimiter code is added by adding a bar output mode code. The bar output mode code is divided into a code having a delimiter code provided in the bar code and a code having no delimiter, and a fifth digit of the initial bar code (the sequence digit is "0") is used for the bar output mode, and in the event that there is provided no delimiter, "0" is added, whereas, in the event that there is provided a delimiter, "1" to "5" are added.

Additionally, the delimiter code is added to a second or later digit of a bar code, and the delimiter code is added to a sixth digit. In the event that a numeric value on the sixth digit is "0", it means that there is provided no delimiter, whereas, in the event that the numeric value is any of "1" to "5", it means that the data is delimited after a digit denoted by the numeric value.

In addition, in the event that there is provided no delimiter, it is designed that the whole digits of the displayed numeric information are added by using the first to fourth digits of the initial bar code (the sequence digit is "0"). According to the construction, the total number of digits can be determined.

Two digits after the whole digits are provided so that a result of calculation of digits of numeric value information is added thereto, and a calculation method is such that the digits of the numeric value information are delimited each two digits, and all the digits so delimited are added up. Lower two digits of the result are added. Thus, by incorporating the result of the whole calculation at the end of the bar code, it is designed that whether or not there exists an error in the read data can be determined.

In addition, two digits after the last delimiter position are designed to be used for the adding position of the calculation result when there exists a digit delimiter. As shown in Fig. 9, bar codes of 13 digits + 13 digits + 8 digits are generated, read and reconstructed, so that the original numeric value information can be obtained.

While there is anticipated a case where radio waves conditions become bad when a mobile telephone receives the original data of the bar code in the form of radio waves, in this case, a bar code image is prepared via the algorithm using instead the original data stored in the mobile apparatus which includes the latest time, and the temporal coincidence in authentication to the server is provided. A time loss due to the bad radio wave conditions can thus be avoided.

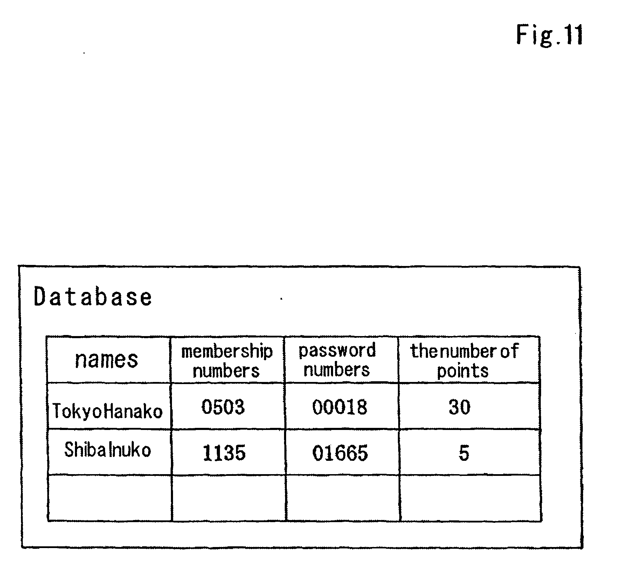

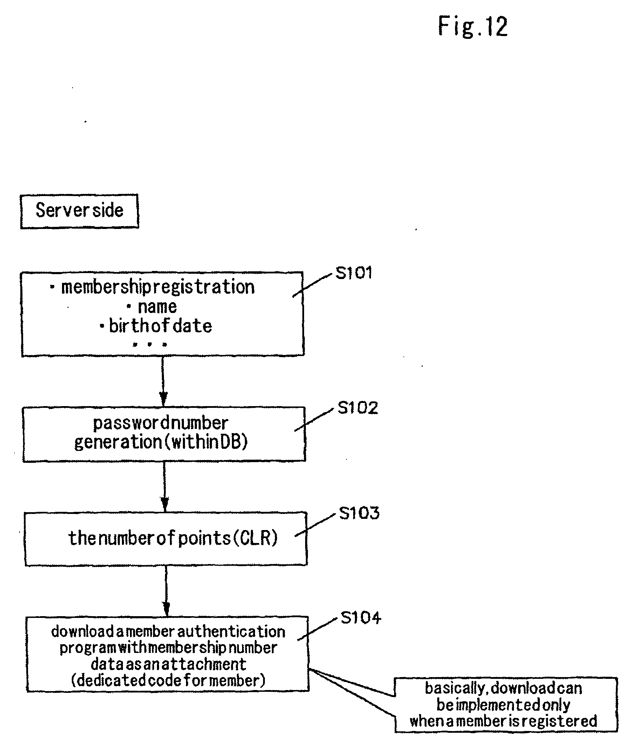

Referring to Figs. 11 to 15, a flow to the completion of a purchase will be described. Firstly, a table showing personal information (name, membership number, password number, the number of points) is provided in a database constituting a server as shown in Fig. 11, and as shown in Fig. 12, the information is registered in the server side data base. In S101, a membership registration is implemented. As this occurs, information (name, birth date, address, telephone number and the like) is registered. Thereafter, the flow proceeds to S102, and in S102, a password number is generated in the interior of the database or DB. Then, the flow proceeds to S103, and in S103, the number of points is cleared, and a point value is initialized. The flow proceeds to S104, and in S104, a membership authentication program is downloaded. Membership number data is attached to the program in advance, and when the program is activated, the authentication of a registered member is implemented. In addition, this program is programmed to communicate mainly with the database so as to receive numeric value information or to receive a bar code image directly.

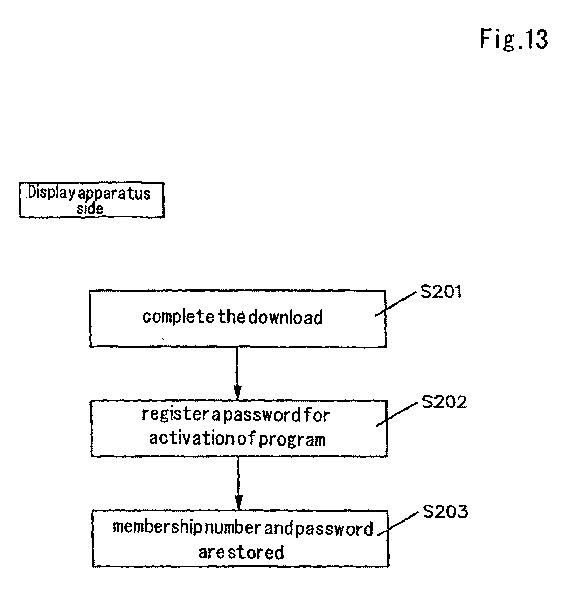

Fig. 13 shows a member registration process carried out on the display apparatus 10 side, and on the display apparatus 10 side, in S201, the reception of a member authentication program is completed, and the flow proceeds to S202. In S202, the member authentication program so received is activated, and the registration of a password number is implemented, the flow proceeding to S203. In 5203, the membership number and password are stored in the storage unit 101, and the display of a membership ID is designed to be implemented automatically when the program is activated next time.

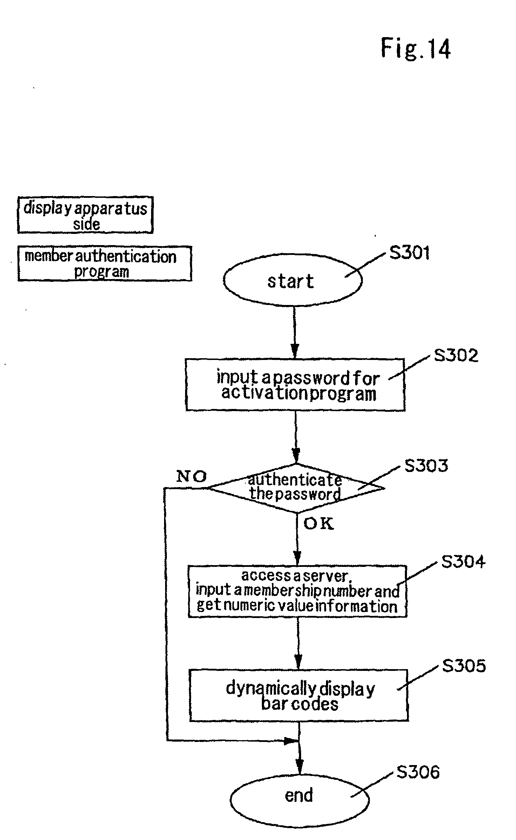

In Fig. 14, in S301, the program received by the display apparatus 10 side is activated. Then, the flow proceeds to S302, and in 5302, a password input screen is displayed, and the password is inputted. Then, the flow proceeds to S303. In 5303, whether or not the password so inputted is correct is verified by fetching the password from the storage unit 101, and in the event that the inputted password is correct, proceed to 5304, whereas, in the event that the password is not correct, proceed to S306. In S304, a corresponding server (database) is accessed for transmission of membership information, and numeric value information is received from the server so accessed. In addition, the authenticating server and the database do not necessarily have to be the same, and after the personal authentication is completed, various databases can be accessed. Thereafter, proceed to 5305. In S305, bar codes are prepared, and the bar codes so prepared are displayed dynamically. Thereafter, proceed to 5306. In 5306, a process on the display apparatus 10 side is designed to be completed.

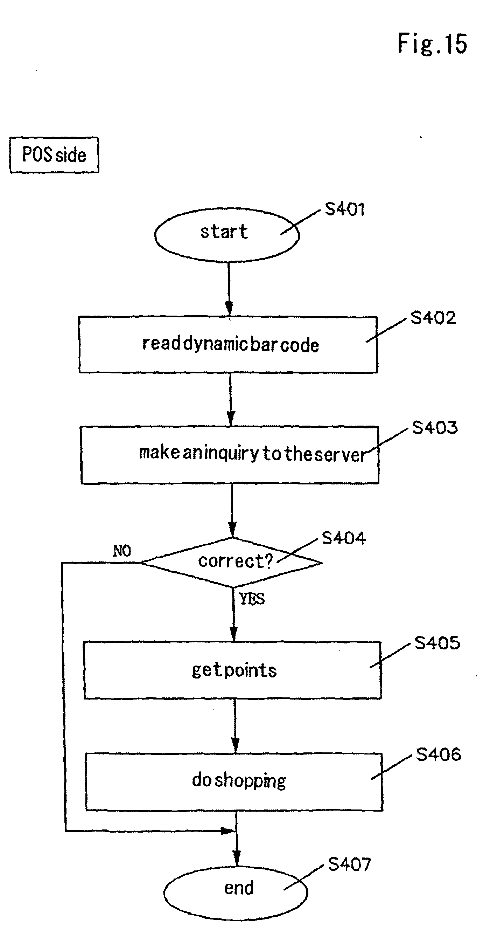

In Fig. 15, a process flow on the bar-code reader side is initiated in S401. Then, proceed to S402. In 5402, the dynamic bar codes which are being displayed on the display apparatus 10 are read with the bar-code reader 20, and then proceed to S403. In 403, the server (database) is accessed for transmission of customer information (membership number), and an inquiry is made to the server. Thereafter, proceed to 5404, and in S404, whether or not the customer is a member is verified. In the event of a member, the flow proceeds to S405. In contrast, in the event that the customer is not a member, the flow proceeds to S407. In S405, in the event that the customer is a member, the number of points is increased, and a result is transmitted to the server (database) to thereby update the database. In addition, at the same time, assuming that a proper communication has been made, information containing point information is stored in the storage unit 101. Thereafter, the flow proceeds to S406, and in S406, shopping is implemented. Thereafter the flow proceeds to S407, and in 5407, the process flow on the bar-code reader side is completed.

Thus, while the invention has been described by taking the preferred embodiment for example, according to the invention, by changing methods from the conventional method in which a plurality of bar codes are arranged in the space for use to the method of the invention in which a plurality of bar codes are used according to time, so that the conventional bar codes which are displayed in a fixed fashion are changed over to the dynamic bar codes which are displayed dynamically, the dynamic bar code display apparatus for displaying the bar codes which are difficult to be copied and which increases the volume of data of the bar codes, the dynamic bar code generation method and the storage medium which generates dynamic bar codes can be provided. In addition, the present invention is not limited to the embodiment but can be modified variously within the technical scope described in claims of the present invention. Examples will be described below in which the dynamic bar codes are actually used.

For example, while public utility charges are conventionally paid based on printed bills on a POS system at a convenience store by transmitting and receiving numeric value information between a database which is accessed to obtain numeric value information for the payment of public utility charges and databases owned by electricity, telephone and gas companies, instead of the conventional system, the dynamic bar codes are displayed on the display apparatus 10, so that the dynamic bar codes so displayed are read with the POS system at the convenience store, thereby making it possible to realize a smooth payment.

Furthermore, as an alternative for a bank card, a credit card, a point card or the like, card data (membership number or the like) replacing a card of each organization is stored in the storage unit 101 within the display apparatus 10, and when used, the dynamic bar codes displayed on the display apparatus 10 are read, and by referring to each database, the display apparatus 10 can be used as a bank card, a credit card, a point card or the like. In addition, different from normal cards, the dynamic changeover of the bar codes on the display apparatus 10 can allow the display apparatus 10 to be used to authenticate an individual in a safer fashion than the normal card.

By entering personal data (name, address, telephone number, ...) such as a driving license and a health insurance card in the storage unit 101 of the display apparatus 10, the personal information so stored can be given in the form of a bar code to a corresponding person when needed.

Data such as a personal ID is stored in the storage unit 101 of the display apparatus 10 instead of a card of prepaid type such as a commuting pass, tolls of motorways, a passport for an amusement part, and when the personal ID is displayed in the form of a bar code, the bar code so displayed is authenticated to each database, thereby making it possible to use the display apparatus 10 as a prepaid card.

In addition, key information is stored in the storage unit 101 of the display apparatus 10, and a simple bar code is designed to be displayed dynamically in a repeated fashion. By providing a bar-code reader is provided in the house, car and the like, the display apparatus 10 can be used instead of keys thereto.

Additionally, while, conventionally, time cards and a time recorder are needed to control the time cards, by storing an employee ID in the storage unit 101 of the display apparatus 10, the management of working hours and working expenditures can be implemented in a real time fashion safely without involvement of any corrupt practice.

Similarly, on a medical site, a patient's chart ID is stored in the storage unit 101 of the display apparatus 10 instead of a clinical card, so that the ID so stored in the display apparatus 10 can be used to register a reception for a medical check, to distribute to the patient a mail announcing a time when he or she can have a medical check and to settle the payment for the medical check given to the patient.

In addition, by providing a bar-code reader within the display apparatus 10, an arbitrary transfer of data between display systems each using a similar display apparatus 10 can be implemented.

In a public lottery of number inputting type, a system is constructed in which a number inputting type lottery card can be purchased through a personal authentication which has a link to a personal bank account. Then, when accessing a lottery card purchasing site to purchase a lottery card by inputting the numbers, on the lottery card purchasing site side, numeric value information to prepare a dynamic bar code or a bar code image is transmitted in the form of an electronic mail so as to be received by the display apparatus 10, and the numeric value information so received by the display apparatus 10 is stored in the storage unit 101 in the display apparatus 10. In the event that the purchased lottery card is determined to win after the lottery, a system can be constructed in which the lottery card can be paid by displaying the corresponding bar code on the display apparatus 10.

In addition, similar to the above case, in handling winning pari-mutuel tickets at a horse racing course, the personal authentication and ticket issuance are implemented in an electronic mail using the display apparatus 10, whereby there are provided advantages that pari-mutuel tickets can be purchased anywhere and that convenience and security at an office where wining tickets are paid can be enhanced.

Furthermore, while the example in which the mobile telephone is used is described in the embodiment, the invention is not limited to the use of the mobile telephone but can be applied not only to an information terminal such as PDA and personal computers but also to various systems having display units.

In addition, while the description is made based on the JAN 8 (standard) in the embodiment, there exist various standards for bar code standards such as JAN 8, JAN 13, CODE 39, ITF, NW-7, CODE 128, UPC, CODE 93, INDUSTRIAL2OF5 and the like, and the dynamic bar code display apparatus, the dynamic bar code generation method and the storage medium which generates a dynamic bar code according to the invention can be applied to all of the standards. In addition, the present invention can be applied not only to bar codes of those standards but also to other bar codes which do not fall within those standards.

Bar codes may be generated in another database or a computer other than the display apparatus 10 which has no display unit 105. As this occurs, the invention can be implemented by receiving dynamic bar code images so generated in the display apparatus 10 via the communication unit 104, and displaying the dynamic bar codes so received on the display unit 105 of the display apparatus 10.

### Industrial Applicability

The present invention is implemented in the mode that has been described heretofore and provides the following advantages.

According to the dynamic bar code display apparatus, the volume of data carried by the bar codes can be increased by displaying continuously at least two or more car codes, and since the bar codes are displayed dynamically, the bar codes which are difficult to be copied easily can be displayed.

According to the dynamic bar code display apparatus, the bar codes can be displayed dynamically by communicating with the external data base via the network so as to transmit to and receive from the external data base numeric value information required to display the bar codes on the display apparatus and bar code images prepared on the data base side.

According to the dynamic bar code display apparatus, the bar codes can be displayed dynamically by dynamically generating the bar code images based on numeric values contained in the numeric value information transmitted and received by the communication means or by combining the bar code images produced on the data base side.

According to the dynamic bar code display apparatus, a plurality of bar codes can be read without moving a bar-code reader when reading the bar codes with the bar-code reader by maintaining the bar code display position unchanged for displaying bar codes, thereby making it possible to reduce the reading time.

According to the dynamic bar code display apparatus, the bar-code reader can be made to obtain an accurate numeric value by adding to each bar code the code indicating the sequence thereof so that the sequence of the bar codes can be reconstructed based on the codes each indicating the sequence thereof, even in the event that the bar-code reader starts the reading of the bar codes at any time and any timing.

According to the dynamic bar code display apparatus, as in the case with check digits used as a standard in bar codes, a calculation is performed based on numeric value information of part or all of the bar codes, and information on the result of the calculation is added, whereby after all of the bar codes have been read, the numeric value information of part or all of bar codes is calculated, and the result of the calculation only has to be compared with the calculation result information to confirm whether or not they coincide with each other. Thus, since a check digit displayed in a bar code does not always have to be calculated every time the bar code has been read, the time involved can be reduced.

According to the dynamic bar code display apparatus, a time limit for usage of the dynamic bar code can be provided by adding to each bar code a time method when the bar code is generated or the image thereof is transmitted or received so as to prevent the copying of the dynamic bar code by, for example, prohibiting the use of the dynamic bar code in the event that a certain length of time is determined to have elapsed since the time when the bar code was generated by comparing the time when the bar code was generated with the current time when the bar code is used.

According to the dynamic bar code display apparatus, accurate numeric values of the bar codes, even in the event that the numbers of digits of the bar codes are different, can be displayed by adding to each bar code a code indicating a code delimiter when the bar code is generated or the image thereof is transmitted or received so that the numeric value information read according to the code delimiter can be processed separately when reading with a bar-code reader and restoring, for example, a bar code consisting of 13 digits + 13 digits + 8 digits.

According to the dynamic bar code display apparatus, the bar codes are generated for display based on the record of the previous normal communication which is stored in the storage means, in the event that a normal communication cannot be implemented in the communication means, so that the bar codes so generated can be displayed as temporary bar codes even in case there existed a state in which the normal communication is unavailable.

According to the dynamic bar code display apparatus, since the display apparatus is constituted by a mobile telephone, numeric value information can be prepared and images of the bar codes can be transmitted and received based on personal information imparted to the mobile telephone by communicating with the external data base with respect to the personal information.

According to the dynamic bar code display apparatus, the display apparatus can be carried easily by making use of not a wired communication but a radio communication (radio waves of the like) when accessing the external data base.

According to the dynamic bar cord display method, the data volume of the bar codes can be increased by displaying the at least two or more bar codes continuously, and since the bar codes are displayed dynamically, the bar codes which are difficult to be copied easily can be displayed.

According to the dynamic bar code display method, the plurality of bar codes can be generated based on the numeric value from the arbitrary numeric value information and can be displayed dynamically.

According to the dynamic bar code display method, the bar codes can be displayed dynamically by dynamically generating the bar code images based on numeric values contained in the numeric value information transmitted and received by the communicating step or by combining the bar code images produced on the data base side.

According to the dynamic bar code display method, the bar-code reader can be made to obtain an accurate numeric value by adding to each bar code the code indicating the sequence thereof so that the sequence of the bar codes can be reconstructed based on the codes each indicating the sequence thereof, even in the event that the bar-code reader starts the reading of the bar codes at any time and any timing.

According to the dynamic bar code display method, a time limit for usage of the dynamic bar code can be provided by adding to one or each of the bar codes a time method when the bar codes are generated or the images thereof are transmitted or received so as to prevent the copying of the dynamic bar codes by, for example, prohibiting the use of the dynamic bar code in the event that a certain length of time is determined to have elapsed since the time when the bar code was generated by comparing the time when the bar code was generated with the current time when the bar code is used.

According to the dynamic bar code display method, as in the case with check digits used as a standard in bar codes, a calculation is performed based on numeric value information of part or all of the bar codes, and information on the result of the calculation is added, whereby after all of the bar codes have been read, the numeric value information of part or all of the bar codes is calculated, and the result of the calculation only has to be compared with the calculation result information to confirm whether or not they coincide with each other. Thus, since a check digit displayed in a bar code does not always have to be calculated every time the bar code has been read, the time involved can be reduced.

According to the dynamic bar code display method, accurate numeric values of the bar codes, even in the event that the numbers of digits of the bar codes are different, can be displayed by adding to each bar code a code indicating a code delimiter when the bar code is generated or the image thereof is transmitted or received so that the numeric value information read according to the code delimiter can be processed separately when reading with a bar-code reader and restoring, for example, a bar code consisting of 13 digits + 13 digits + 8 digits.

According to the dynamic bar code display method, the bar codes are generated for display based on the record of the previous normal communication which is stored in the storage means, in the event that a normal communication cannot be implemented in the communicating step, so that the bar codes so generated can be displayed as temporary bar codes even in case there existed a state in which the normal communication is unavailable.

According to the storage medium, when executing the program of the storage medium, the data volume of the bar codes can be increased by causing the at least two or more bar codes to be displayed continuously, and since the bar codes are displayed continuously, the bar codes which are difficult to be copied easily can be displayed.

According to the storage medium, when executing the program of the storage medium, the plurality of bar codes can be generated based on numeric values contained in the arbitrary numeric value information so that the plurality of bar codes so generated can be displayed dynamically.

According to the storage medium, when the program of the storage medium is executed, the bar codes can be displayed dynamically by dynamically generating the bar code images based on numeric values contained in the numeric value information transmitted and received by the communicating program or by combining the bar code images produced on the data base side.

According to the storage medium, when the program of the storage medium is executed, a bar-code reader can be made to obtain an accurate numeric value by adding to each bar code the code indicating the sequence thereof so that the sequence of the bar codes can be reconstructed based on the codes each indicating the sequence thereof, even in the event that the bar-code reader starts the reading of the bar codes at any time and any timing.

According to the storage medium, when executing the program of the storage medium, a time limit for usage of the dynamic bar code can be provided by adding to one or each of the bar codes a time method when the bar codes are generated or the images thereof are transmitted or received so as to prevent the copying of the dynamic bar codes by, for example, prohibiting the use of the dynamic bar code in the event that a certain length of time is determined to have elapsed since the time when the bar code was generated by comparing the time when the bar code was generated with the current time when the bar code is used.

According to the storage medium, when executing the program of the storage medium, accurate numeric values of the bar codes, even in the event that the numbers of digits of the bar codes are different, can be displayed by adding to each bar code a code indicating a code delimiter when the bar code is generated or the image thereof is transmitted or received so that the numeric value information read according to the code delimiter can be processed separately when reading with a bar-code reader and restoring, for example, a bar code consisting of 13 digits + 13 digits + 8 digits.

According to the storage medium, when executing the program of the storage medium, as in the case with check digits used as a standard in bar codes, a calculation is performed based on numeric value information of part or all of the bar codes, and information on the result of the calculation is added, whereby after all of the bar codes have been read, the numeric value information of part or all of the bar codes is calculated, and the result of the calculation only has to be compared with the calculation result information to confirm whether or not they coincide with each other. Thus, since a check digit displayed in a bar code does not always have to be calculated every time the bar code has been read, the time involved can be reduced.

According to the storage medium, when executing the program of the storage medium, the bar codes are generated for display based on the record of the previous normal communication which is stored in the storage means, in the event that a normal communication cannot be implemented in the communicating program, so that the bar codes so generated can be displayed as temporary bar codes even in case there existed a state in which the normal communication is unavailable.

## Claims

1. A dynamic bar code display apparatus comprising storage means in which the image of a bar code is stored, display means for displaying continuously at least two or more bar codes and control means for controlling the display means, whereby at least two or more bar codes are displayed continuously.

2. A dynamic bar code display apparatus as set forth in Claim 1, comprising communication means for communicating with an external data base via a network, so that at least two or more bar codes are continuously displayed thereon based on information transmitted to and received from the external data base as a result of transmitting to and receiving from the external data base bar code images and numerical information.

3. A dynamic bar code display apparatus as set forth in Claim 1 or 2, comprising generating means for generating at least two or more bar code images based on information transmitted and received by the communication means, so that the images so generated are made to be stored in the storage means so as to implement the display of at least two or more bar codes.

4. A dynamic bar code display apparatus as set forth in any of Claims 1 to 3, wherein a bar code display position of the display means remains unchanged for displaying bar codes.

5. A dynamic bar code display apparatus as set forth in any of Claim 1 to 4, wherein two or more bar codes which are displayed on the display means each have a code displayed therein which has an additional code indicating a sequence thereof.

6. A dynamic bar code display apparatus as set forth in any of Claims 1 to 5, wherein a code indicating a result of calculation of numeric value information of part or all of bar codes is added to be displayed in either or any of at least two or more bar codes which are displayed by the display means.

7. A dynamic bar code display apparatus as set forth in any of Claims 1 to 6, wherein at least two or more bar codes which are displayed on the display means each have a code displayed therein which has an additional code indicating time information.

8. A dynamic bar code display apparatus as set forth in any of Claims 1 to 7, wherein at least two or more bar codes which are displayed on the display means each have a code displayed therein which has an additional code indicating a code delimiter.

9. A dynamic bar code display apparatus as set forth in any of Claims 1 to 8, wherein, in the event that a normal communication cannot be implemented in the communication means, at least two or more bar codes are generated for display based on a record of the previous normal communication which is stored in the storage means.

10. A dynamic bar code display apparatus as set forth in any of Claims 1 to 9, comprising a mobile telephone that can be carried.

11. A dynamic car code display apparatus as set forth in any of Claims 1 to 10, wherein the communication by the communication means is implemented by transmitting and receiving information to and from the external data base by accessing the network using radio waves.

12. A dynamic bar code display method having a reading step of reading at least two or more bar code images from a storage means in which bar code images are stored and a displaying step of displaying at least two or more bar codes by causing the at least two or more bar code images so read to continue.

13. A dynamic bar code display method having a bar code generating step of generating a plurality of bar code images from arbitrary numeric value information and a displaying step for displaying at least two or more bar codes by causing the at least two or more bar code images so generated to continue.

14. A dynamic bar code display method as set forth in Claim 12 or 13, having a communicating step of communicating with an external data base via a network in the communicating step, whereby numeric value information or bar code image information which is required to generate a bar code is transmitted to and received from the external data base.

15. A dynamic bar code display method as set forth in either of Claims 13 and 14, having a sequence adding step for adding a code indicating a sequence thereof to each of the plurality of bar codes when the plurality of bar codes are generated in the bar code generating step.

16. A dynamic bar code display method as set forth in any of Claims 13 to 15, having a time adding step of adding a code indicating a time to one or each of the plurality of bar codes when the plurality of bar codes are generated in the bar code generating step.

17. A dynamic bar code display method as set forth in any of Claims 13 to 16, having a calculation result adding step of adding a code indicating a result of calculation of the numeric value information to one or each of the plurality of bar codes when the plurality of bar codes are generated in the bar code generating step.

18. A dynamic bar code display method as set forth in any of Claims 13 to 17, having a code delimiter adding step of adding a code indicating a code delimiter to one or each of the plurality of bar codes when the plurality of bar codes are generated in the bar code generating step.

19. A dynamic bar code display method as set forth in any of Claims 12 to 18, wherein in the event that a normal communication cannot be implemented in the communicating step, at least two or more bar codes are generated for display based on a record of the previous normal communication which is stored in a storage means.

20. A storage medium, wherein a program is stored in the storage medium which contains a reading program code for reading at least two or more images each having a bar code from storage means where bar code images are stored and a displaying program code, which is executable by a computer, for displaying at least two or more bar codes by causing the images so read to continue.

21. A storage medium, wherein a program is stored in the storage medium which contains a bar code image generating program code for generating a plurality of bar code images from arbitrary numeric value information and a displaying program code, which is executable by a computer, for displaying at least two or more bar codes by causing the plurality of bar code images so generated to continue.

22. A storage medium as set forth in Claim 20 or 21, wherein a program is stored in the storage medium which contains a communicating program code provided in the dynamic bar code display program for communicating with an external data base via a network and a program code, which is executable by a computer, for transmitting to and receiving from the external data base numeric value information or a bar code image itself which is required to generate a bar code in the communicating program.

23. A storage medium as set forth in either of Claims 21 to 22, wherein a program is stored in the storage medium which contains a time adding program code, which is executable by a computer, for adding a code indicating a time to one or each of the plurality of bar codes when the plurality of bar codes are generated in the bar code generating program.

24. A storage medium as set forth in any of Claims 21 and 23, wherein a program is stored in the storage medium which contains a sequence adding program code, which is executable by a computer, for adding a code indicating a sequence thereof to each of a plurality of bar codes when the plurality of bar codes are generated in the bar code generating program.

25. A storage medium as set forth in any of Claims 21 to 24, wherein a program is stored in the storage medium which contains a code delimiter adding program code, which is executable by a computer, for adding a code indicating a code delimiter to one or each of the plurality of bar codes when the plurality of bar codes are generated in the bar code generating program.

26. A storage medium as set forth in any of Claims 21 to 25, wherein a program is stored in the storage medium which contains a calculation result adding program code, which is executable by a computer, for adding a code indicating a result of calculation of the numeric value information to one or each of the plurality of bar codes when the plurality of bar codes are generated in the bar code generating program.

27. A storage medium as set forth in any of Claims 20 to 26, wherein a program is stored in the storage medium which contains a program, which is executable by a computer, for generating at least two or more bar codes for display based on a record of the previous normal communication which is stored in a storage means, in the event that a normal communication cannot be implemented in the communicating program.
